# EUROPÄISCHE PATENTSCHRIFT

(11) **EP 1 525 442 B1**
(45) Veröffentlichungstag und Bekanntmachung des Hinweises auf die Patenterteilung: **01.06.2011**
(21) Anmeldenummer: 03787613.3
(22) Anmeldetag: 27.06.2003
(51) Int. Cl.: G01J 3/46

(54) **VERFAHREN ZUR ANALYSE VON FARBABWEICHUNGEN VON BILDERN MIT EINEM BILDSENSOR**
METHOD FOR ANALYZING THE COLOR DEVIATIONS IN IMAGES USING AN IMAGE SENSOR
PROCEDE POUR ANALYSER DES DIVERGENCES DE COULEUR DANS DES IMAGES A L'AIDE D'UN CAPTEUR D'IMAGE

(30) Priorität: 26.07.2002 DE 10234085
(43) Veröffentlichungstag der Anmeldung: 27.04.2005
(73) Patentinhaber: Koenig & Bauer Aktiengesellschaft, 97080 Würzburg (DE)
(72) Erfinder: LOHWEG, Volker, 33699 Bielefeld (DE); WILLEKE, Harald, Heinrich, 33102 Paderborn (DE)
(86) Internationale Anmeldenummer: PCT/DE2003/002146
(87) Internationale Veröffentlichungsnummer: WO 2004/017034

(56) Entgegenhaltungen:
- EP-B1- 0 473 432
- DE-A- 4 419 395
- US-A- 5 361 094
- US-A- 5 361 094
- US-A1- 2002 021 444
- SWAIN M J ET AL: "COLOR INDEXING", INTERNATIONAL JOURNAL OF COMPUTER VISION, KLUWER ACADEMIC PUBLISHERS, NORWELL, US, vol. 7, no. 1, 1 November 1991 (1991-11-01), pages 11-32, XP000248428, ISSN: 0920-5691, DOI: DOI:10.1007/BF00130487

## Beschreibung

Die Erfindung betrifft ein Verfahren zur Analyse von Farbabweichungen von Bildern mit einem Bildsensor gemäß dem Oberbegriff des Anspruchs 1.

Das in der Technik meist verwendete trichromatische Modell zur Beschreibung von additiven Farbbildern ist das RGB-Modell. Im RGB-Modell wird der Farbraum durch die drei Grundfarben Rot, Grün und Blau beschrieben. Nachteilig an diesem Modell ist insbesondere, dass die durch das RGB-Modell vorgenommene Beschreibung nicht dem Empfinden des menschlichen Auges entspricht, da insbesondere das Verhalten der menschlichen Perzeption, also die Wahrnehmung durch die Sinnesorgane, keine Berücksichtigung findet.

Die DE 44 19 395 A1 offenbart ein Verfahren zur Analyse von Farbbildern mittels Bildsensor, dessen Bildsignale pixelweise analysiert werden. Dabei werden die Bildsignale nach Buntheit und Helligkeit getrennt.

Die DE 692 24 812 T2 beschreibt ein Verfahren zur Bildverarbeitung bei dem RGB-Signale in Farbsignalwerte L, C1, C2 nichtlinear transformiert werden.

Durch die DE 198 38 806 A1 ist ein Verfahren zur Klassifikation von Farbbildern mittels Fuzzy-Logik bekannt.

Die US 2002/021444 A1 beschreibt Berechnungsvorschriften zur Bildverarbeitung mit Gewichtsfaktoren der einzelnen Farbkomponenten.

Aus dem Artikel von Michael J. Swain und Dana H. Ballard, 'Color Indexing', International Journal of Computer Vision, 7:I, pages 11-32 (1991), XP000248428 ist ein Verfahren zur Analyse von Farbabweichungen von Bildern bekannt, wobei aus Farbkanälen, die den rezeptiven Feldern des menschlichen Auges entsprechen, Gegenfarbkanäle generiert werden. Diese Gegenfarbkanäle werden zum Erstellen von Histogrammen verwendet.

Die EP 0 473 432 B1 offenbart ein Bildanalyseverfahren, das eine Transformation mit mehreren Eingangssignalen mit zugehörigen Berechnungsvorschriften vorsieht.

Der Erfindung liegt die Aufgabe zugrunde, ein Verfahren zur Analyse von Farbabweichungen von Bildern mit einem Bildsensor zu schaffen.

Die Aufgabe wird erfindungsgemäß durch die Merkmale des Anspruchs 1 gelöst.

Im menschlichen Auge existieren drei Zapfentypen, die in unterschiedlichen Spektralbereichen absorbieren. Die maximale Absorption des S-Zapfentyps liegt im blauen Bereich und zwar bei 420nm, der M-Zapfentyp absorbiert maximal im grünen Spektralbereich und zwar bei 534nm und der L-Zapfentyp hat sein Absorptionsmaximum bei 564nm im Gelb/Roten Spektralbereich. Man nennt das Sehen mit drei Zapfentypen trichomatisches Sehen. Die einzelnen Farbeindrücke werden durch unterschiedliche Erregungsstärken der einzelnen Zapfensorten ausgelöst. Gleiche Erregung aller Zapfen führt zum Eindruck der Farbe weiß. Mit dem trichromatischen Sehmodell können aber Farbempfindungsphänomene wie beispielsweise der Farbantagonismus und die Farbkonstanz nicht erklärt werden.

Farbantagonismus bedeutet, dass bestimmte Farben nie in Übergängen gesehen werden können, dass also kein Farbübergang zwischen diesen Farben möglich ist. Farben die den Farbantagonismus zeigen nennt man Gegen- oder Komplementärfarben. Zu nennen sind hier die Farbpaare Rot/Grün und Blau/Gelb sowie Schwarz/Weiß.

Bei der Farbkonstanz wird die unterschiedliche spektrale Verteilung des Lichts, die beispielsweise abhängig von Wetter oder Tageslichtverhältnissen ist, ausgeglichen.

1920 entwickelte Hering die Gegenfarbentheorie um diese Farbempfindungsphänomene abweichend vom klassischen trichromatischen Farbmodell zu erklären. Das Gegenfarbmodell geht davon aus, dass die Zapfen in rezeptiven Feldern, nämlich in Blau/Gelb-Feldern und Rot/Grün-Feldern angeordnet sind. Unter rezeptiven Feldern sind hier Neuronen zu verstehen und die Art und Weise, wie die von den Zapfen kommenden Lichtsignale durch die Neuronen weiter verarbeitet werden. Für das Farbensehen sind im Wesentlichen zwei Arten von rezeptiven Feldern verantwortlich. Das erste rezeptive Feld bezieht seinen Input aus den L- und M-Zapfen, das zweite rezeptive Feld aus den S-Zapfen zusammen mit unterschiedlich gewichteten Signalen der L- und M-Zapfen. Man geht davon aus, dass in der Ebene der Neuronen oder rezeptiven Felder eine subtraktive Farbmischung der Erregungen der Zapfen vorgenommen wird.

Beim Verfahren zur Analyse von Farbabweichungen von Druckbildern wird in an sich bekannter Weise das vom Bildsensor empfangene Bildsignal pixelweise analysiert. Um die drei Zapfensorten des menschlichen Auges mit ihrer unterschiedlichen spektralen Empfindlichkeit nachzubilden, wird gemäß der Erfindung das Bildsignal durch den Bildsensor in drei voneinander getrennten Farbkanälen aufgenommen. Jeder der drei Farbkanäle besitzt eine charakteristische spektrale Empfindlichkeit. Die beiden rezeptiven Felder, welche die zweite Stufe der Farbverarbeitung beim menschlichen Sehen darstellen, werden durch entsprechende Verknüpfung der Bildsensorsignale der drei voneinander getrennten Farbkanäle simuliert. Das Rot/Grün-Feld der menschlichen Farbwahrnehmung stellt im technischen Modell den ersten Gegenfarbkanal dar. Das Ausgangssignal des ersten Gegenfarbkanals wird durch Verknüpfung des Bildsensorsignals eines ersten Farbsignals mit dem Bildsensorsignal eines zweiten Farbkanals generiert. Die Verknüpfung geschieht mittels einer Berechnungsvorschrift, welche aus zumindest einer Rechenregel besteht. Das Blau/Gelb-Feld wird im technischen Modell durch Verknüpfung des Bildsensorsignals eines dritten Farbkanals mit einer Kombination aus den Bildsensorsignalen des ersten und des zweiten Farbkanals erzeugt. Das Blau/Gelb-Feld entspricht im technischen Modell dem zweiten Gegenfarbkanal. Das Ausgangssignal des zweiten Gegenfarbkanals wird durch die vorgehend beschriebene Verknüpfung generiert. Die Verknüpfung geschieht mittels einer zweiten Berechnungsvorschrift, welche aus zumindest einer Rechenregel besteht. Um den Bildinhalt des untersuchten Pixel zu bewerten, findet im nächsten Schritt eine Klassifikation der Ausgangssignale der beiden Gegenfarbkanäle statt. Dadurch wird entschieden, ob der Bildinhalt des untersuchten Pixel einer bestimmten Klasse entspricht, wodurch eine gut/schlecht Klassifikation getroffen werden kann.

In welchem spektralen Bereich die drei Farbkanäle des Verfahrens liegen, ist für das Prinzip der Erfindung ohne wesentlichen Belang, solange es sich um voneinander getrennte Farbkanäle handelt. Eine bevorzugte Ausführungsform der Erfindung besteht darin, dass die drei Farbkanäle den Grundfarben des RGB-Modells, nämlich Rot, Grün und Blau entsprechen. Dies hat den Vorteil, dass auf ein weit verbreitetes Farbmodell zurückgegriffen werden kann.

Um die spektrale Empfindlichkeit jedes Farbkanals an das spektrale Empfinden der entsprechenden Zapfen der Retina des menschlichen Auges anzugleichen, ist es sinnvoll, wenn jeder Farbkanal in seiner spektralen Empfindlichkeit an die spektrale Empfindlichkeit der Zapfen angepasst werden kann.

Die beiden Ausgangssignale der Gegenfarbkanäle werden erfindungsgemäß gemäß der entsprechenden Verfahrensschritte des Anspruchs 1 generiert. Eine alternative, aus X P 000 248 428 bereits bekannte Möglichkeit besteht darin, dass eine Rechenregel der ersten Berechnungsvorschrift eine gewichtete Differenzbildung des Bildsensorsignals des zweiten Farbkanals vom Bildsensorsignal des ersten Farbkanals und / oder eine Rechenregel der zweiten Berechnungsvorschrift eine gewichtete Differenzbildung der gewichteten Summe der Bildsensorsignale des ersten und zweiten Farbkanals vom Bildsensorsignal des dritten Farbkanals vorsieht.

Bei der Erfindung wird jedes Signal der Gegenfarbkanäle vor der Verknüpfung einer nichtlinearen Transformationsvorschrift unterzogen. Eine Transformation hat insbesondere den Vorteil, dass der digitale Charakter von elektronisch erzeugten Aufnahmen Berücksichtigung finden kann. Ebenfalls ist es durch Transformationsvorschriften möglich, ein Signal aus dem Farbraum in einen Raum zu transformieren, in welchem die Erregung der Zapfen beschrieben werden kann. Da die rezeptiven Felder beim menschlichen Sehen durch ein Tiefpassverhalten charakterisiert sind, ist es sinnvoll, wenn zumindest ein Signal in zumindest einem Gegenfarbkanal mittels eines Tiefpassfilters gefiltert wird. Nach einem besonders bevorzugten Ausführungsbeispiel wird das Ausgangssignal jedes Gegenfarbkanals mittels eines Tiefpassfilters gefiltert.

Nach einem besonders bevorzugten Ausführungsbeispiel weist das Verfahren einen Lernmodus und einen Inspektionsmodus auf. Während des Lernmodus wird zumindest ein Referenzbild pixelweise analysiert und die durch das Referenzbild erzeugten Ausgangssignale der beiden Gegenfarbkanäle in einem Referenzdatenspeicher gespeichert. Konkret bedeutet das, dass der Bildinhalt des Referenzbilds in drei Farbkanälen aufgezeichnet wird, die Bildsignale jedes Farbkanals empfindungsgemäß angepasst werden und anschließend entsprechend dem Gegenfarbmodell miteinander verknüpft werden. Die Ausgangssignale jedes Gegenfarbkanals werden dann pixelweise im Referenzdatenspeicher gespeichert. Im nachfolgenden Inspektionsmodus werden dann die durch ein Prüfbild erzeugten Ausgangssignale des entsprechenden Pixels mit den entsprechenden Wert des Referenzdatenspeichers verglichen und eine Klassifikationsentscheidung getroffen.

Um zulässige Schwankungen des Bildinhalts, wie auch Schwankungen der Bedingungen bei der Bildaufnahme zu berücksichtigen ist es sinnvoll, wenn die im Referenzdatenspeicher gespeicherten Werte durch die Analyse mehrerer Referenzdatensätze gebildet werden, so dass für jeden Wert im Referenzdatenspeicher ein zulässiges Toleranzfenster festgelegt wird innerhalb dessen ein bei der Bildinspektion erzeugter Ausgangssignalwert eines Gegenfarbkanals schwanken kann. Der Sollwert des Ausgangssignals eines Gegenfarbkanals kann hierbei beispielsweise durch arithmetische Mittelwertbildung der Einzelwerte die sich aus den Referenzdatensätzen ergeben ermittelt werden. Das Toleranzfenster kann beispielsweise durch die Minimal- und Maximalwerte oder durch die Standardabweichung der durch die untersuchten Referenzbilder erzeugten

Ausgangssignale der Gegenfarbkanäle jedes Pixels festgelegt werden.

Ausführungsbeispiele der Erfindung sind in den Zeichnungen dargestellt und werden im Folgenden näher beschrieben.

Es zeigen:
- Fig. 1: schematische Darstellung des Verfahrens zur Analyse von Farbabweichungen von Druckbildern mit einem Gegenfarbmodell;
- Fig. 2: einen Ablaufplan des Lern- und Inspektionsmodus.

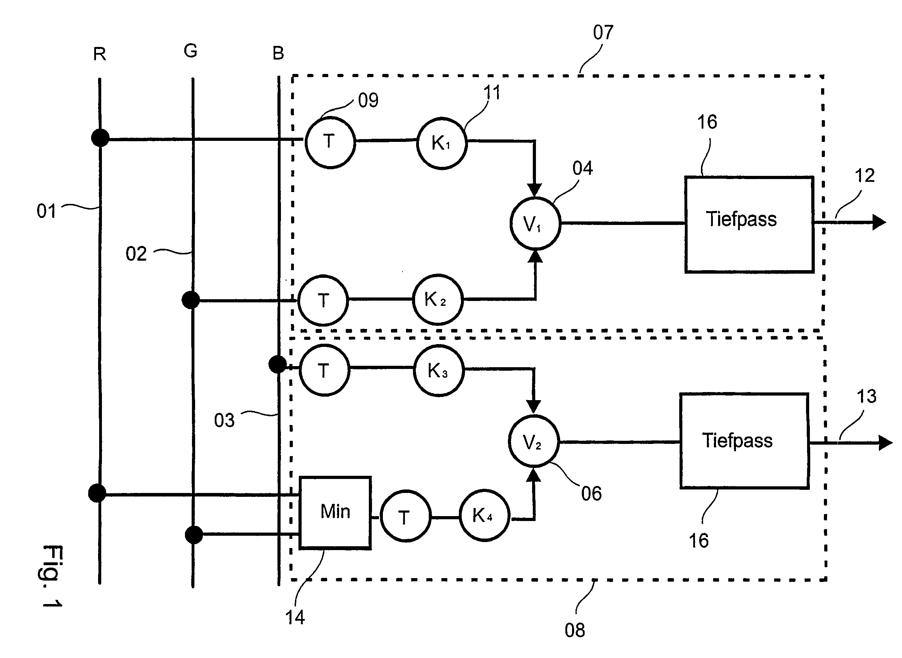

Wie in der Fig. 1 zu erkennen ist, erfolgt die Aufnahme des Bildsignals durch einen Bildsensor in drei voneinander getrennten Farbkanälen 01; 02; 03. Im vorliegenden Ausführungsbeispiels handelt es sich bei den Farbkanälen 01; 02; 03 um die Farbkanäle Rot 01, Grün 02 und Blau 03. Jeder der Farbkanäle 01; 02; 03 weist eine einstellbare spektrale Empfindlichkeit auf. Dies hat den Vorteil, dass jeder Farbkanal 01; 02; 03 in seiner Charakteristik an die Bedingungen der vorliegenden Problemstellung angeglichen werden kann. So ist es beispielsweise möglich, die spektrale Empfindlichkeit eines Farbkanals 01; 02; 03 an die spektrale Empfindlichkeit des jeweiligen Zapfens der Retina des menschlichen Auges anzupassen.

Beim erfindungsgemäßem Verfahren wird der Spektralgehalt eines Bildes pixelweise analysiert. Zur Modellierung der beiden rezeptiven Felder Rot/Grün und Blau/Gelb des menschlichen Auges werden im erfindungsgemäßen Verfahren die Bildsensorsignale der Farbkanäle 01; 02; 03 miteinander verknüpft. Vor der eigentlichen Verknüpfung mit den Berechnungsvorschriften 04; 06 wird jedes Bildsensorsignal im Gegenfarbkanal 07; 08 einer nicht linearen Transformation 09 unterzogen. Dadurch wird dem digitalen Charakter der elektronisch erzeugten Aufnahmen Rechnung getragen. Anschließend wird jedes Signal mit einem Koeffizienten Kᵢ (i=1...4) 11 gewichtet. Dadurch wird erreicht, dass eine reine Intensitätsänderung des Ausgangsbilds keinen Beitrag zu einem der Ausgangssignale 12; 13 der Gegenfarbkanäle 07; 08 liefert. Die Generierung der Ausgangssignale 12; 13 der Gegenfarbkanäle 07; 08 erfolgt analog der Generierung der Signale der rezeptiven Felder bei der menschlichen Retina. Das heißt, es wird eine Verknüpfung mittels der Berechnungsvorschriften 04; 06 der Farbkanäle 01; 02; 03 entsprechend der Verknüpfung der Zapfen der menschlichen Retina durchgeführt. Zur Schaffung des Ausgangssignals 12 des Rot/Grünen-Gegenfarbkanals 07 werden die Bildsensorsignale des roten Farbkanals 01 und des grünen Farbkanals 02 miteinander mittels der ersten Berechnungsvorschrift 04 verknüpft. Zur Generierung des Ausgangssignals 13 des Blau/Gelben-Gegenfarbkanals 08 wird im vorliegenden Ausführungsbeispiel das Bildsensorsignal des blauen Farbkanals 03 mit dem Minimum 14 der Bildsensorsignale des roten Farbkanals 01 und des grünen Farbkanals 02 mittels der Berechnungsvorschrift 06 verknüpft. Die rezeptiven Felder der menschlichen Retina sind durch ein Tiefpassverhalten charakterisiert. Dementsprechend werden im vorliegenden Ausführungsbeispiel die durch Verknüpfung erhaltenen Signale einer Tiefpassfilterung 16 mit einem Gauss-Tiefpassfilter unterzogen.

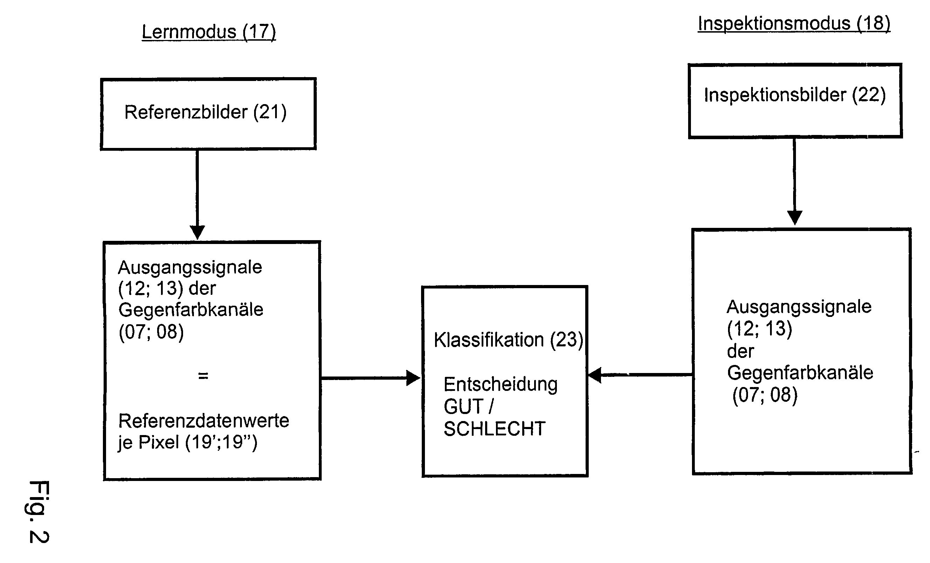

Die Fig. 2 zeigt die eigentliche Inspektion der Druckprodukte, welche zweistufig erfolgt, nämlich in einem Lernmodus 17 und einem nachgeschalteten Inspektionsmodus 18. Der Lernmodus 17 hat das Ziel der pixelweisen Generation von Referenzdatenwerten 19, die im nachfolgenden Inspektionsmodus 18 mit den Ausgangssignalen 12; 13 der Gegenfarbkanäle 07; 08 der entsprechenden Pixel verglichen werden. Beim Lernmodus 17 werden die Bildinhalte von einem Referenzbild 21 oder von mehreren Referenzbildern 21 dadurch analysiert, dass die Bildinhalte jedes Pixels in drei Farbkanälen 01; 02; 03 aufgenommen werden und eine anschließende wahrnehmungsgemäße Anpassung der Bildsignale jedes Farbkanals 01; 02; 03 vorgenommen wird und nachfolgend eine Weiterverarbeitung der Bildsensorsignale nach der oben beschriebenen Gegenfarbmethode durchgeführt wird. Die für jedes Pixel erhaltenen Ausgangssignale 12; 13 der Gegenfarbkanäle 07; 08 werden dann in einem Referenzdatenspeicher gespeichert. Um zulässige Schwankungen der Referenzbilder 21 mit zu berücksichtigen, ist es sinnvoll, wenn mehrere Referenzbilder 21 im Lernmodus 17 Berücksichtigung finden. Dadurch ist es möglich, dass die in Referenzspeicher gespeicherten Referenzdatenwerte 19', 19" jedes Pixels eine gewisse zulässige Schwankungstoleranz aufweisen. Die Schwankungstoleranz kann entweder durch die Minimal-/ Maximalwerte oder die Standardabweichung aus den erhaltenen Daten der Bildinhalte der Referenzbilder 21 jedes Pixels festgelegt werden.

Im Inspektionsmodus 18 findet dann ein pixelweiser Vergleich der Ausgangswerte 12, 13 der Gegenfarbkanäle 07; 08 eines Inspektionsbildes 22 mit den Referenzdatenwerten 19', 19" aus dem Referenzdatenspeicher statt. Der Vergleich kann mittels eines linearen oder nichtlinearen Klassifikators 23, insbesondere mittels Schwellwertklassifikatoren, Euklidische - Abstands - Klassifikatoren, Bayes - Klassifikatoren, Fuzzy-Klassifikatoren oder künstliche neuronale Netze, durchgeführt werden. Anschließend findet eine gut/schlecht - Entscheidung statt.

### Bezugszeichenliste

- 01: erster (roter) Farbkanal
- 02: zweiter (grüner) Farbkanal
- 03: dritter (blauer) Farbkanal
- 04: erste Berechnungsvorschrift
- 05: -
- 06: zweite Berechnungsvorschrift
- 07: erster (rot/grüner) Gegenfarbkanal; erster neuer Farbkanal
- 08: zweiter (blau/gelber) Gegenfarbkanal; zweiter neuer Farbkanal
- 09: nichtlineare Transformation
- 10: -
- 11: Koeffizienten Kᵢ (i=1...4)
- 12: Ausgangssignal d. ersten (rot/grünen) Gegenfarbkanals, Ausgangswert
- 13: Ausgangssignal d. zweiten (blau/gelben) Gegenfarbkanals, Ausgangswert
- 14: Minimum von rotem und grünen Farbkanal
- 15: -
- 16: Tiefpassfilter
- 17: Lernmodus
- 18: Inspektionsmodus
- 19: Referenzdatenwerte
- 20: -
- 21: Referenzbild
- 22: Inspektionsbild
- 23: Klassifikator, Klassifikatorsystem
- 19': Ausgangssignal, Referenzdatenwert
- 19": Ausgangssignal, Referenzdatenwert

## Patentansprüche

1. Verfahren zur Analyse von Farbabweichungen von Druckbildern mit einem Bildsensor, wobei das vom Bildsensor empfangene Bildsignal pixelweise analysiert wird, **gekennzeichnet durch** folgende Verfahrensschritte:
- aus Farbkanälen (01; 02; 03) wird für jeden Farbkanal (01; 02; 03) ein Bildsensorsignal erzeugt;
- Verknüpfung des Bildsensorsignals eines ersten Farbkanals (01) mit dem Bildsensorsignal eines zweiten Farbkanals (02) mittels einer ersten Berechnungsvorschrift (04) wodurch ein Ausgangssignal (12) eines ersten Gegenfarbkanals (07) generiert wird, sowie Verknüpfung des Bildsensorsignals eines dritten Farbkanals (03) mit den Bildsensorsignalen des ersten (01) und des zweiten Farbkanals (02) mittels einer zweiten Berechnungsvorschrift (06) wodurch ein Ausgangssignal (13) eines zweiten Gegenfarbkanals (08) generiert wird;
- der erste Farbkanal (07) entspricht dem Rot/Grün rezeptiven Feld des menschlichen Auges;
- der zweite Farbkanal (08) entspricht dem Blau/Gelb rezeptiven Feld des menschlichen Auges;
- die erste Berechnungsvorschrift (04) sieht eine gewichtete Differenzbildung des Bildsensorsignals des zweiten Farbkanals (02) vom Bildsensorsignal des ersten Farbkanals (01) vor;
- die zweite Berechnungsvorschrift (06) sieht eine Verknüpfung des Minimums der Bildsensorsignale des ersten Farbkanals (01) und des zweiten Farbkanals (02) mit dem Bildsensorsignal des dritten Farbkanals (03) vor;
- jedes Bildsensorsignal wird vor der Verknüpfung mittels der Berechnungsvorschriften (04; 06) einer nichtlinearen Transformation (09) unterzogen und nach der nichtlinearen Transformation (09) mit einem Koeffizienten (11) gewichtet, so dass eine reine Intensitatsänderung des Ausgangsbilds keinen Beitrag zu einem der Ausgangssignale (12; 13) der Gegenfarbkanäle (07; 08) liegert;
- Klassifikation (23) der Ausgangssignale (12; 13) der Gegenfarbkanäle (07; 08), wobei in einem Inspektionsmodus (18) die **durch** ein Inspektionsbild (22) erzeugten Ausgangssignale (12; 13) der beiden Gegenfarbkanäle (07; 08) pixelweise mit Referenzdatenwerten (19'; 19") eines Referenzdatenspeichers verghichen werden, wodurch entschieden wird, ob der Bildinhalt des untersuchten Pixel einer bestimmten Klasse entspricht.

2. Verfahren nach Anspruch 1, **dadurch gekennzeichnet, dass** die drei Farbkanäle (01; 02; 03) den Grundfarben des RGB-Modells, nämlich R=rot, G=grün und B=blau entsprechen.

3. Verfahren nach Anspruch 1, **dadurch gekennzeichnet, dass** die spektrale Empfindlichkeit jedes Farbkanals (01; 02; 03) einstellbar ist.

4. Verfahren nach Anspruch 1, **dadurch gekennzeichnet, dass** in zumindest einem Gegenfarbkanal (07; 08) zumindest ein Signal mittels eines Tiefpassfilters (16), insbesondere eines Gauss-Tiefpassfilters, gefiltert wird.

5. Verfahren nach Anspruch 1, **dadurch gekennzeichnet, dass** das Verfahren einen Lernmodus (17) und einen Inspektionsmodus (18) aufweist, wobei im Lernmodus (17) die durch zumindest ein Referenzbild (21) erzeugten Referenzdatenwerte (19'; 19") der beiden Gegenfarbkanäle (07; 08) in einem Referenzdatenspeicher gespeichert werden, und wobei im Inspektionsmodus (18) die durch ein Inspektionsbild (22) erzeugten Ausgangssignale (12; 13) der beiden Gegenfarbkanäle (07; 08) pixelweise mit den Referenzdatenwerten (19'; 19") des Referenzdatenspeichers verglichen werden.

6. Verfahren nach Anspruch 5, **dadurch gekennzeichnet, dass** der Vergleich mittels eines Klassifikatorsystems (23) durchgeführt wird.

7. Verfahren nach Anspruch 6, **dadurch gekennzeichnet, dass** lineare und/oder nichtlineare Klassifikatorsysteme (23), insbesondere Schwellwertklassifikatoren, Euklidische-Abstands-Klassifikatoren, Bayes-Klassifikatoren, Fuzzy-Klassifikatoren, oder künstliche neuronale Netze, Verwendung finden.

8. Verfahren nach Anspruch 5, **dadurch gekennzeichnet, dass** die im Referenzdatenspeicher gespeicherten Refenzdatenwerte (19'; 19") jedes Pixels durch Analyse mehrerer Referenzbilder (21) erzeugt werden, wodurch für die Referenzdatenwerte (19'; 19") ein Toleranzfenster festgelegt wird.

9. Verfahren nach Anspruch 1, **dadurch gekennzeichnet, dass** mit dem Verfahren Druckbilder analysiert werden.

## Claims

1. Method for analyzing colour deviations in printed images by using an image sensor, the image signal received from the image sensor being analyzed pixel by pixel, **characterized by** the following method steps:
- from colour channels (01; 02; 03), an image sensor signal is generated for each colour channel (01; 02; 03);
- combining the image sensor signal from a first colour channel (01) with the image sensor signal from a second colour channel (02) by means of a first calculation rule (04), by which means an output signal (12) from a first complementary colour channel (07) is generated, and combining the image sensor signal from a third colour channel (03) with the image sensor signals from the first (01) and the second colour channel (02) by means of a second calculation rule (06), by which means an output signal (13) from a second complimentary colour channel (08) is generated;
- the first colour channel (07) corresponds to the red/green receptive area of the human eye;
- the second colour channel (08) corresponds to the blue/yellow receptive area of the human eye;
- the first calculation rule (04) provides for formation of a weighted difference between the image sensor signal from the second colour channel (02) and the image sensor signal from the first colour channel (01);
- the second calculation rule (06) provides for combination of the minimum of the image sensor signals from the first colour channel (01) and from the second colour channel (02) with the image sensor signal from the third colour channel (03);
- before the combination by means of the calculation rules (04; 06), each image sensor signal is subjected to a non-linear transformation (09) and, after the non-linear transformation (09), is weighted with a coefficient (11) so that a pure change in the intensity of the output image makes no contribution to one of the output signals (12; 13) from the complementary colour channels (07; 08);
- classification (23) of the output signals (12; 13) from the complementary colour channels (07; 08); in an inspection mode (18) the output signals (12; 13) generated by an inspection image (22) from the two complementary colour channels (07; 08) being compared pixel by pixel with reference data values (19'; 19") from a reference data memory, by which means it is decided whether the image content of the pixel investigated corresponds to a specific class.

2. Method according to Claim 1, **characterized in that** the three colour channels (01; 02; 03) correspond to the primary colours of the RGB model, namely R=red, G=green and B=blue.

3. Method according to Claim 1, **characterized in that** the spectral sensitivity of each colour channel (01; 02; 03) is adjustable.

4. Method according to Claim 1, **characterized in that**, in at least one complimentary colour channel (07; 08), at least one signal is filtered by means of a low pass filter (16), in particular a Gauss low pass filter.

5. Method according to Claim 1, **characterized in that** the method has a learning mode (17) and an inspection mode (18); in the learning mode (17) the reference data values (19'; 19") from the two complementary colour channels (07; 08) produced by at least one reference image (21) being stored in a reference data memory and, in the inspection mode (18), the output signals (12; 13) from the two complementary colour channels (07; 08) generated by an inspection image (22) being compared pixel by pixel with the reference data values (19'; 19") from the reference data memory.

6. Method according to Claim 5, **characterized in that** the comparison is carried out by means of a classifier system (23).

7. Method according to Claim 6, **characterized in that** linear and/or non-linear classifier systems (23), in particular threshold value classifiers, Euclidean space classifiers, Bayes classifiers, fuzzy classifiers or artificial neural networks, are used.

8. Method according to Claim 5, **characterized in that** the reference data values (19'; 19") of each pixel stored in the reference data memory are generated by means of analyzing a plurality of reference images (21), by which means a tolerance window for the reference data values (19'; 19") is defined.

9. Method according to Claim 1, **characterized in that** printed images are analyzed by using the method.

## Revendications

1. Procédé pour analyser des divergences de couleur dans des images d'impression à l'aide d'un capteur d'image, le signal d'image reçu du capteur d'image étant analysé en mode pixel, **caractérisé par** les étapes de procédé suivantes :
- un signal de capteur d'image est généré pour chaque canal de couleur (01 ; 02 ; 03) parmi des canaux de couleur (01 ; 02 ; 03);
- combinaison du signal de capteur d'image d'un premier canal de couleur (01) avec le signal de capteur d'image d'un deuxième canal de couleur (02) au moyen d'une première prescription de calcul (04), faisant qu'est généré un signal de sortie (12) d'un premier canal de couleur complémentaire (07), ainsi que combinaison du signal de capteur d'image d'un troisième canal de couleur (03) avec les signaux de capteur d'image du premier (01) et du deuxième canal de couleur (02) au moyen d'une deuxième prescription de calcul (06), faisant qu'est généré un signal de sortie (13) d'un deuxième canal de couleur complémentaire (08) ;
- le premier canal de couleur (07) correspond au champ réceptif rouge/vert de l'oeil humain ;
- le deuxième canal de couleur (08) correspond au champ réceptif bleu/jaune de l'oeil humain ;
- la première prescription de calcul (04) prévoit une formation de différence pondérée du signal de capteur d'image du deuxième canal de couleur (02) vis-à-vis du signal de capteur d'image du premier canal de couleur (01) ;
- la deuxième prescription de calcul (06) prévoit une combinaison du minimum des signaux de capteurs d'image du premier canal de couleur (01) et du deuxième canal de couleur (02) avec le signal de capteur d'image du troisième canal de couleur (03) ;
- avant la combinaison au moyen des prescriptions de calcul (04 ; 06), chaque signal de capteur d'image est soumis à une transformation non linéaire (09) et, après la transformation non linéaire (09), est pondéré avec un coefficient (11), de manière qu'une pure variation d'intensité de l'image de sortie ne fournisse aucune contribution à l'un des signaux de sortie (12 ; 13) des canaux de couleur complémentaire (07 ; 08) ;
- classification (23) des signaux de sortie (12, 13) des canaux de couleur complémentaire (07 ; 08), sachant que, en un mode d'inspection (18), les signaux de sortie (12, 13), générés par une image d'inspection (22), des deux canaux de couleur complémentaire (07 ; 08) sont comparés en mode pixel à des valeurs de données de référence (19' ; 19") d'une mémoire à données de référence, faisant qu'est décidé si le contenu d'image des pixels examinés correspond à une classe déterminée.

2. Procédé selon la revendication 1, **caractérisé en ce que** les trois canaux de couleur (01 ;02 ; 03) correspondent aux couleurs de base du modèle RGB, précisément R = rouge, G = vert et B = bleu.

3. Procédé selon la revendication 1, **caractérisé en ce que** la sensibilité spectrale de chaque canal de couleur (01 ; 02 ; 03) est réglable.

4. Procédé selon la revendication 1, **caractérisé en ce que**, en au moins un canal de couleur complémentaire (07 ; 08), au moins un signal est filtré à l'aide d'un filtre passe-bas (16), en particulier d'un filtre passe-bas de Gauss.

5. Procédé selon la revendication 1, **caractérisé en ce que** le procédé présente un mode d'apprentissage (17) et un mode d'inspection (18), sachant que, dans le mode d'apprentissage (17), les valeurs de données de référence (19', 19"), générées par au moins une image de référence (21), des deux canaux de couleurs complémentaires (07 ; 08) sont mémorisées dans une mémoire à données de référence, et sachant que, en mode d'inspection (18), les signaux de sortie (12, 13), générés par une image d'inspection (22), des deux canaux de couleurs complémentaires (07 ; 08) sont comparés, en mode pixel, aux valeurs de données de référence (19', 19") de la mémoire à données de référence.

6. Procédé selon la revendication 5, **caractérisé en ce que** la comparaison est effectuée au moyen d'un système de classification (23).

7. Procédé selon la revendication 6, **caractérisé en ce que** des systèmes de classification linéaires et/ou non linéaires (23), en particulier des classificateurs à valeurs de seuil, des classificateurs à distance euclidienne, des classificateurs de Bayes, des classificateurs fuzzy, ou des réseaux neuronaux artificiels sont utilisés.

8. Procédé selon la revendication 5, **caractérisé en ce que** les valeurs de données de référence (19', 19"), mémorisées dans la mémoire à données de référence, de chaque pixel sont générées par analyse de plusieurs images de référence (21), faisant qu'une fenêtre de tolérance est fixée pour les valeurs de données de référence (19', 19").

9. Procédé selon la revendication 1, **caractérisé en ce que** des images d'impression sont analysées avec le procédé.
